# EUROPÄISCHE PATENTSCHRIFT

(11) **EP 1 697 724 B1**
(45) Veröffentlichungstag und Bekanntmachung des Hinweises auf die Patenterteilung: **04.03.2020**
(21) Anmeldenummer: 04790054.3
(22) Anmeldetag: 28.10.2004
(51) Int. Cl.: G01N 21/35, G01N 21/03, G01N 21/05

(54) **GASSENSOR**
GAS SENSOR
DETECTEUR DE GAZ

(30) Priorität: 20.12.2003 DE 10360215
(43) Veröffentlichungstag der Anmeldung: 06.09.2006
(73) Patentinhaber: ROBERT BOSCH GMBH, 70442 Stuttgart (DE)
(72) Erfinder: LUDWIG, Ronny, 72770 Reutlingen (DE)
(86) Internationale Anmeldenummer: PCT/DE2004/002399
(87) Internationale Veröffentlichungsnummer: WO 2005/062024

(56) Entgegenhaltungen:
- EP-A- 0 825 430
- WO-A-2004/010116
- WO-A-2004/023113
- DE-A1- 10 200 908
- DE-A1- 19 645 321
- DE-C1- 19 512 126
- DE-U1- 20 203 759
- DE-U1- 20 301 081
- GB-A- 2 262 338
- US-A- 6 067 840
- US-A1- 2002 104 967
- US-A1- 2004 188 622
- US-B1- 6 469 303
- PATENT ABSTRACTS OF JAPAN Bd. 2000, Nr. 01, 31. Januar 2000 (2000-01-31) & JP 11 271221 A (HORIBA LTD), 5. Oktober 1999 (1999-10-05)
- PATENT ABSTRACTS OF JAPAN Bd. 1997, Nr. 11, 28. November 1997 (1997-11-28) & JP 09 184803 A (HORIBA LTD), 15. Juli 1997 (1997-07-15)

## Beschreibung

Die Erfindung betrifft einen Gassensor zur Messung mindestens einer Gaskonzentration durch Absorption infraroter Strahlung in einem Gas.

Sensoren zur Messung einer Gaskonzentration oder von Gaskonzentrationen verschiedener Einzelgase werden derzeit hauptsächlich in medizinischen und biologischen Anwendungsbereichen oder in der Branddetektion eingesetzt. Bei einem spektroskopischen Messprinzip wird ausgenutzt, dass IR (Infrarot)-Strahlung von den verschiedenen Einzelgasen eines Gasgemisches jeweils in spezifischen Wellenlängenbereichen absorbiert wird. Die Gaskonzentration eines Einzelgases kann somit durch Messung der absoluten Absorption oder einer relativen Absorption im Vergleich zu einem Referenz-Wellenlängenbereich ermittelt werden.

Derartige Gassensoren weisen im allgemeinen eine IR-Strahlungsquelle und einen IR-Detektor auf, die sich entlang einer optischen Achse linear gegenüber stehen. Der Messbereich, in dem die relevante Gaskonzentration gemessen wird, d.h. die Absorption der IR-Strahlung stattfindet, ist entlang der optischen Achse zwischen IR-Strahlungsquelle und IR-Detektor ausgebildet. Der IR-Detektor wandelt die aufgenommene IR-Strahlung im Allgemeinen in eine Thermospannung um. Aus dem Patent DE 19512126 C1 ist eine Vorrichtung zum Detektieren eines Gases bekannt. Die Strahlung der optischen Strahlungsquelle wird mittels eines Parabolspiegels in die Messstrecke eingekoppelt. Ein zweiter Parabolspiegel fokussiert die durchgelaufene Strahlung auf den Empfänger.

Für hohe Empfindlichkeiten sind bei diesem Messprinzip lange Absorptionswege, d.h. ein relativ großer Abstand zwischen Strahlenquelle und Detektor, von Vorteil. Um bei langen Absorptionswegen einen ausreichenden Strahlungseintrag in das Detektorelement zu bekommen, werden relativ starke IR-Strahlungsquellen verwendet, die entsprechend einen hohen Stromverbrauch aufweisen. Insbesondere für Anwendungen im Kfz-Bereich ist ein hoher Stromverbrauch jedoch nicht wünschenswert. Weiterhin findet bei hohen Leistungen und einer kompakten Ausbildung des Gassensors, bei dem IR-Strahlungsquelle und IR-Detektor als gemeinsames Modul installiert sind, eine allmähliche Aufheizung statt, die das über die Thermospannung gemessene Messsignal verfälscht; hierzu kann nur mit sehr hohem Aufwand eine Kompensation erreicht werden.

Bei kürzeren Absorptionsstrecken ist das Messsignal, insbesondere das Signal-Rausch-Verhältnis, gering. Durch Verwendung von Reflektionsflächen kann zwar zunächst die Absorptionsstrecke vergrößert werden; es treten im Allgemeinen jedoch Mehrkosten durch die erforderlichen Reflektoren auf; weiterhin ist eine optische Justage, gegebenenfalls auch eine nachträgliche Korrektur der Anordnung der Reflektoren erforderlich. Da bei einer Reflektion an den Reflektionsflächen ein Teil der IR-Strahlung absorbiert wird und auch Reflexionsverluste durch Streuung auftreten, wird das Messsignal wiederum verringert. An den Reflektoren können sich weiterhin von der Gaszirkulation nicht erfasste Totbereiche ausbilden, die ein dynamisches Messverhalten erschweren.

Der erfindungsgemäße Gassensor weist demgegenüber insbesondere den Vorteil auf, dass ein einfacher, kostengünstiger und kompakter Aufbau möglich ist und dennoch ein großes Messsignal, insbesondere ein hohes Signal-Rausch-Verhältnis, bei guten dynamischen Messeigenschaften möglich ist.

Da die IR-Strahlungsquelle und der IR-Detektor auf einem gemeinsamen Substrat, vorzugsweise einer Leiterplatte angebracht werden, ist eine schnelle und kostengünstige Herstellung, z.B. mittels Standard - Bestückungsverfahren der Leiterplattentechnologie, möglich. Insbesondere die Montage auf einer einzigen Substratseite ist hierbei vorteilhaft. Durch die Abschirmeinrichtung wird eine direkte Signalübertragung zwischen IR- Strahlungsquelle und IR-Detektor verhindert, so dass die Messung über die erfindungsgemäßen konkav gewölbten Spiegelbereiche erfolgt.

Die gewölbten, konkaven Spiegelbereiche vergrößern den effektiven Messbereich ohne eine Aufweitung des Strahlenganges; vorteilhafterweise kann sogar eine Bündelung und somit Intensitätserhöhung bewirkt werden. Der Messraum wird zwischen der Reflektionsfläche und dem Substrat gebildet und kann hierdurch großvolumig und dennoch kompakt ausgebildet werden.

Die Montage weiterer optischer Komponenten auf dem Substrat ist nicht erforderlich. Die Reflektionsfläche kann ohne aufwändige Justage und nachträgliche Korrektur montiert werden, da ihre Position relativ zu dem Substrat und somit auch zu dem Detektor und der Strahlungsquelle leicht festlegbar ist. Hierbei wird bei der Montage auf einer Leiterplatte eine sofort funktionsfähige, elektrische Baugruppe gebildet, die vor dem Einbau in das umgebende Gehäuse direkt getestet werden kann.

Die Reflektionsfläche kann als Innenseite eines Reflektors ausgebildet sein, der direkt auf dem Substrat oder an der IR-Strahlungsquelle und dem IR-Detektor und somit indirekt auf dem Substrat befestigt wird. Alternativ hierzu kann die Reflektionsfläche auch als Innenfläche eines Gehäusedeckels ausgebildet sein. Da weitere optische Komponenten nicht erforderlich sind, ergibt sich ein einfacher, kompakter Aufbau.

Die Gesamtschaltung kann über kalte Kontaktiertechnik mit der Außenwelt verbunden werden, z.B. über Einpressstifte zwischen Leiterplatte und Gehäuse, so dass eine kostengünstige, sichere und schnelle Kontaktierung in einem Arbeitsschritt möglich ist.

Bei Verwendung einer im Querschnitt sphärischen, insbesondere zylinderförmigen Reflektionsfläche ist eine im Verhältnis zur Gesamtgröße des Gehäuses lange Absorptionsstrecke realisierbar. Indem die Strahlungsquelle sehr dicht an der Reflektionsfläche angeordnet wird, treten aufgrund des geringen Einfallswinkels auf der Reflektionsfläche nur sehr geringe Strahlungsverluste auf, z.B. ca. 4 %. Hierdurch kann auch eine Strahlungsquelle mit geringer Leistungsaufnahme bzw. geringerer Strahlungsleistung gewählt werden, wodurch der Stromverbrauch gesenkt wird. Bei einer derartigen halbrunden bzw. zylinderförmigen Innenfläche kann eine optimale Gasverteilung im Messraum erreicht werden, bei der keine Totvolumina oder Gasssümpfe ausgebildet werden. Somit ist eine genaue und dynamische Messung möglich.

Bei Verwendung von parabolischen Spiegelbereichen, welches Beispiel nicht Teil der Erfindung ist, kann im Messraum ein großer effektiver Messbereich bei hoher Signalintensität aufgrund der starken Bündelung der IR-Strahlung ausgebildet werden.

Erfindungsgemäß können mehrere Detektorbereiche in Längsrichtung hintereinander angeordnet sein.

Die Erfindung wird im Folgenden anhand der beiliegenden Zeichnungen an einigen Ausführungsformen erläutert. Es zeigen:
- Fig. 1: einen Schnitt durch einen erfindungsgemäßen Gassensor mit zylinderförmiger Reflektionsfläche;
- Fig. 2: eine Detailvergrößerung der IR-Strahlungsquelle aus Fig. 1;
- Fig. 3: einen Schnitt durch einen Gassensor gemäß einem Beispiel, das nicht Teil der Erfindung ist, mit am Gehäusedeckel befestigter bzw. integrierter zylinderförmiger Reflektionsfläche;
- Fig. 4: eine perspektivische Darstellung der Reflektionsfläche des Sensors aus Fig. 3:
- Fig. 5: eine Draufsicht auf eine Ausführungsform einer eine Gasdurchlassöffnung aufweisenden Leiterplatte der erfindungsgemäßen Gassensoren;
- Fig. 6: einen Schnitt durch einen Gassensor gemäß einer weiteren Ausführungsform mit einer Reflektionsfläche mit zwei sphärischen Spiegelbereichen;
- Fig. 7: einen Schnitt durch einen Gassensor gemäß einem Beispiel, das nicht Teil der Erfindung ist, mit zwei parabolischen Spiegelbereichen.

Ein Gasdetektor 1 weist eine als Substrat dienende Leiterplatte 2, eine auf der Leiterplatte 2 angebrachte IR -Strahlungsquelle 3 und einen auf der Leiterplatte 2 angebrachten IR-Detektor 4 auf. Weiterhin ist ein Reflektor 5 mit einer halben zylinderförmigen Reflektionsfläche 6 vorgesehen, der zusammen mit der Leiterplatte 2 einen Messraum 9 umgibt, in dem eine oder mehrere Gaskonzentrationen gemessen werden. Die erfindungsgemäße Reflektionsfläche 6 reflektiert Strahlung zumindest im relevanten InfrarotBereich und kann vorzugsweise als Metallschicht bzw. Metallbeschichtung oder komplett aus Metall ausgebildet sein.

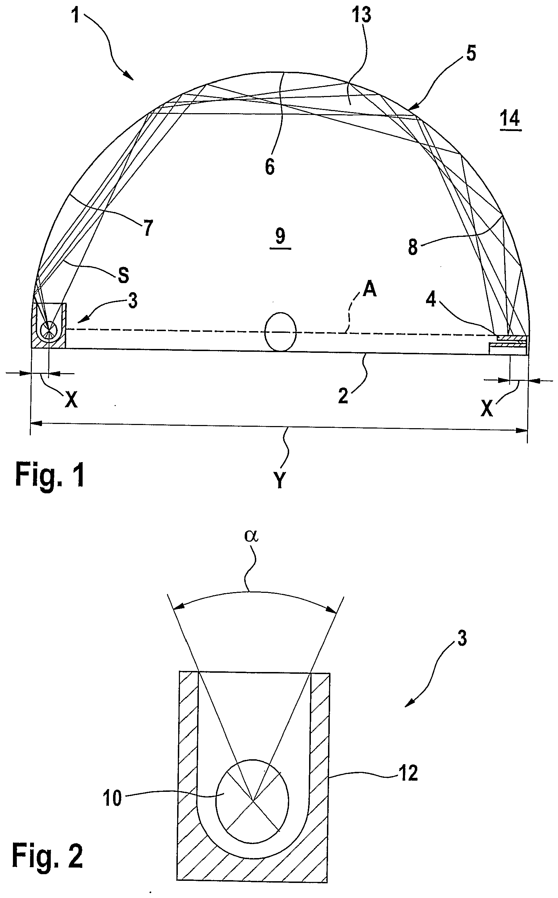

Die in Fig. 2 detailliert gezeigte IR-Strahlungsquelle 3 weist eine IR-Lampe 10 - z.B. eine Glühbirne oder IR-LED, und ein als erfindungsgemäße Abschirmeinrichtung dienendes Kleingehäuse 12 auf, das lediglich IR-Strahlung unter einem Ausstrahlwinkel α von vorzugsweise 40° bis 60°, z.B. 50° austreten lässt. Die IR-Strahlungsquelle 3 und der IR-Detektor 4 sind nahe an der zylinderförmigen Reflektionsfläche 6 angeordnet, d.h. der Abstand X der Reflektionsfläche 6 von der IR-Strahlungsquelle 3 und dem IR-Detektors 4 ist sehr klein gegenüber dem Kreisdurchmesser Y der Reflektionsfläche 6, vorzugsweise im Verhältnis 1: 20 bis 1: 40, z.B. 1: 32, so dass nur eine oberflächennahe Strahlweiterleitung stattfindet. Das Kleingehäuse 12 verhindert zum einen eine direkte Übertragung von IR-Strahlung von der IR-Strahlungsquelle 3 zu dem IR-Detektor 4 entlang der optischen Achse A und lässt zum anderen IR-Strahlung lediglich unter einem flachen Reflektionswinkel auf die zylinderförmige Reflektionsfläche 6 austreten. Der Reflektionswinkel an der Reflektionsfläche 6 liegt hierbei z.B. in einem Bereich von 20° bis 40°, z.B. etwa bei 30°. Die IR-Strahlung wird an der zylinderförmigen Reflektionsfläche 6 mehrfach, z.B. gemäß Fig. 1 etwa 2- bis 4-mal, reflektiert, bis sie zu dem IR-Detektor 4 gelangt. Der IR-Detektor 4 kann z.B. als Thermopile-Element ausgebildet sein, das die aufgenommene IR-Strahlung als Wärmedifferenz misst und als Thermospannung ausgibt. Alternativ hierzu können auch andere IR-Detektoren vorgesehen sein. Bei dem gezeigten erfindungsgemäßen Gasdetektor ist aufgrund der Abschirmung des Messraums 9 durch die Leiterplatte 2 und die Reflektionsfläche 6 eine Einwirkung von Fremdstrahlung weitgehend ausgeschlossen. Bei Messung lediglich einer Gaskonzentration ist nur ein Strahlungsfilter, wahlweise im Bereich der Strahlenquelle oder vor dem Detektor bzw. im Detektor integriert erforderlich. Falls gasspezifisch auf verschiedene Gaskonzentrationen gemessen werden soll, kann der Detektor 4 entsprechend unterteilt sein in mehrere, mit spezifischen Strahlungsfiltern versehene Detektorbereiche, die die Absorption in jeweiligen Wellenlängenbereichen messen.

Die IR-Strahlung füllt bei dieser Ausführungsform lediglich einen sich entlang der Reflektionsfläche 6 erstreckenden, schmalen Messbereich 13 aus; der innere Bereich des Messraums 9 dient nicht der Detektion des Gases. Aufgrund des kleinen Reflektionswinkels findet nur eine geringe Absorption der IR-Strahlung an der Reflektionsfläche 6 statt, so dass auch trotz mehrfacher Reflektionen ein hohes Signal erreicht wird. Bei dem gezeigten Aufbau wird zudem praktisch annähernd die vollständige, von der Strahlungsquelle 3 ausgesandte Strahlung auch von dem IR-Detektor 4 erfasst.

Der Gasaustausch zwischen dem Messraum 9 und einem Außenraum 14 kann bei den Ausführungsformen zum einen in Längsrichtung, d.h. parallel zur Oberfläche der Leiterplatte 2 und senkrecht zur optischen Achse A erfolgen. Weiterhin ist ein Gasaustausch über Gasdurchtritte 15 möglich, die durch die Leiterplatte 2 verlaufen. Grundsätzlich sind weiterhin auch Gasdurchtritte durch den Reflektor 5 möglich, indem dieser bereichsweise als Gitter ausgebildet ist.

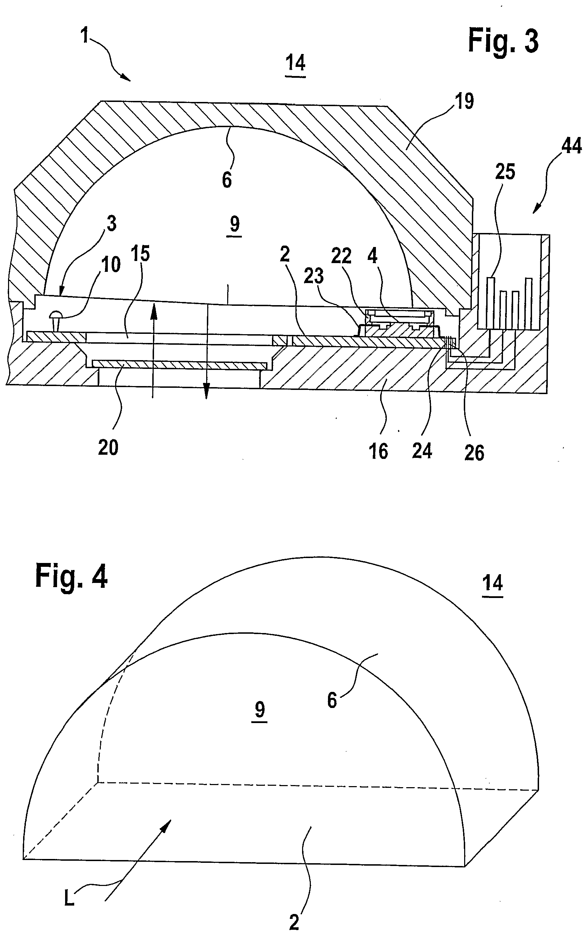

Bei dem Beispiel der Fig. 3, das nicht Teil der Erfindung ist, ist die Leiterplatte 2 auf einem Gehäuseunterteil 16 angebracht, auf dem ein Gehäusedeckel 19 strahlungsdicht gesetzt ist. Die Reflektionsfläche 6 ist hierbei auf der konkaven Innenseite des Gehäusedeckels 19 ausgebildet, z.B. durch Einschmelzen in den Gehäusedeckel 19 oder Aufdampfen einer Metallschicht auf die zylinderförmige Innenfläche des Gehäusedeckels 19.

Der Gasaustausch zwischen Messraum 9 und Außenraum 14 ist bei dieser Ausführungsform zum einen in Längsrichtung L möglich, wie aus Fig. 4 erkennbar ist; es ist jedoch auch eine Ausbildung mit verschlossener Vorder- und Rückseite und somit ohne Gasaustausch in Längsrichtung L möglich. Weiterhin ist ein Gasaustausch durch einen Gasdurchtritt 15 in der Leiterplatte 10 möglich, der durch eine poröse Membran 20 verschlossen ist.

Bei dem in Fig. 3 gezeigten Beispiel, das nicht Teil der Erfindung ist, ist die Abschirmeinrichtung nicht bei der IR-Strahlungsquelle 3, sondern an dem IR-Detektor 4 vorgesehen. Hierzu ist der als Thermopile-Chip ausgebildete IR-Detektor 4 in ein Kleingehäuse 22 gesetzt, das über Anschlusspins 23 mit der Leiterplatte 2 kontaktiert ist. Die IR-Strahlungsquelle 3 kann hierbei als einfache, nicht abgeschirmte Lampe 10 ausgebildet sein. Auch bei diesem Beispiel mit zylinderförmiger Reflektionsfläche 6 sind die IR-Strahlungsquelle 3 und der IR-Detektor 4 nahe an der Reflektionsfläche 6, z.B. auch bereichsweise unterhalb der Reflektionsfläche 6, angeordnet.

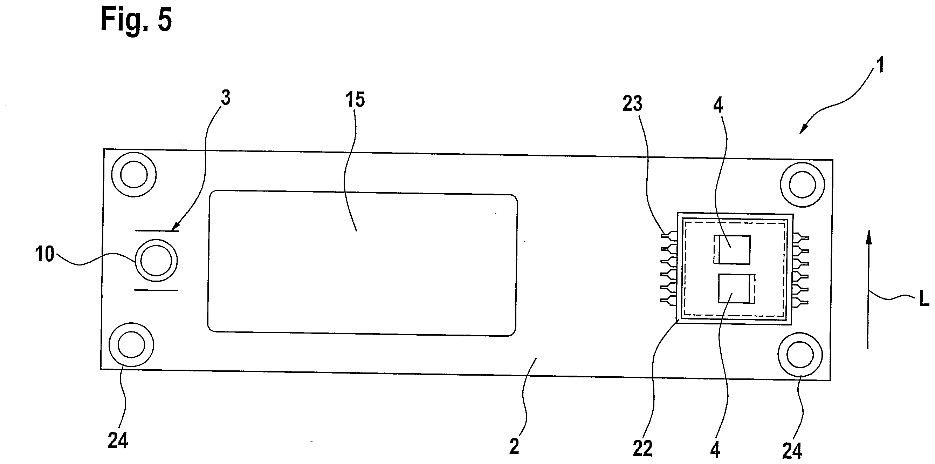

Die Befestigung und Kontaktierung der Leiterplatte 2 auf dem Gehäuseunterteil 16 kann vorzugsweise über eine kalte Kontaktiertechnik erfolgen, wie aus dem Schnitt der Fig. 3 und der Draufsicht auf die Leiterplatte 2 der Fig. 5 ersichtlich ist. Hierbei ist auf der Leiterplatte 2 mindestens eine Einpressbuchse 24 ausgebildet, die mit den Anschlusspins 23 über nicht gezeigte Leiterbahnen und diepads verbunden ist. Durch die Ausbildung von vier Einpressbuchsen 24 kann aufgrund deren Lage und Anordnung ein fester Sitz der Letierplatte 2 erreicht werden. Die Einpressbuchse 24 wird in Einpressstifte 26 des Gehäuseunterteils 16 gesteckt, die mit Kontakten 25 einer Anschlussbuchse 44 des Gehäuseunterteils 16 verbunden sind, wie in der schematischen Darstellung der Fig. 3 angedeutet ist. Über die Kontakte 25 erfolgt die Stromversorgung und Signalaufnahme vom Detektorchip 4 sowie die Stromversorgung der IR-Strahlungsquelle 3.

Wie aus Fig. 5 ersichtlich ist, sind vorzugsweise mehrere Detektoren 4 in Längsrichtung L hintereinander angeordnet, z.B. zur Messung eines oder mehrerer relevanter Wellenlängenbereiche und eines Referenzwellenlängenbereichs, um eine relative Messung zu ermöglichen. Aufgrund des in Längsrichtung L langgezogenen, z.B. zylindrischen Aufbaus wird die Anordnung mehrerer Detektoren erleichtert, wobei die Strahlengänge der IR-Strahlung S nahe bei einander liegen, so dass die Strömungsverhältnisse des Gases sich entsprechen und Fehler durch unterschiedliche Gas- oder Strömungsverhältnisse zumindest sehr gering sind.

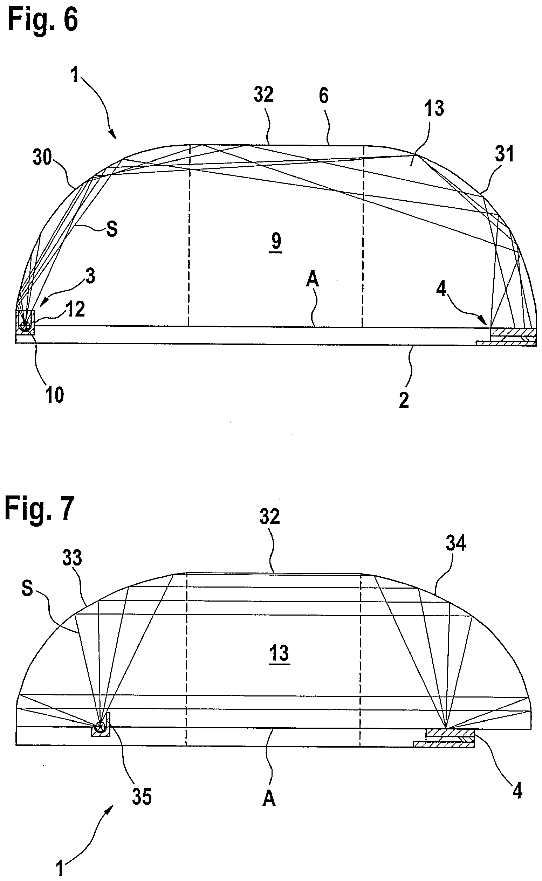

Bei der in Fig. 6 gezeigten Ausführungsform sind die IR-Strahlungsquelle 3 und der IR-Detektor 4 jeweils an einem sphärischen Spiegelbereich 30, 31 der Reflektionsfläche 6 angeordnet, wobei die Spiegelbereiche 30, 31 über einen mittleren, ebenen Flächenbereich 32 verbunden sind. Auch bei dieser Ausführungsform erstreckt sich die im Schnitt gezeigte Reflektionsfläche 6 in Längsrichtung L, so dass die Flächenbereiche 30, 31 zylinderförmig ausgebildet sind.

Die IR-Strahlungsquelle 3 und der Detektor 4 sind wiederum nahe den sphärischen Spiegelbereichen 30, 31 angeordnet, z.B. mit dem gleichen Verhältnis des Abstandes X zu dem Kreisdurchmesser Y der sphärischen Spiegelbereiche wie in Fig. 1 beschrieben. Die durch das Kleingehäuse 12 der IR-Strahlungsquelle 3 gebildete Abschirmeinrichtung lässt lediglich denjenigen Teil der Strahlung S der IR-Lampe 10 durch, der auf den sphärischen Spiegelbereich 30 gerichtet ist. Bei dieser Ausführungsform wird gegenüber der Ausführungsform der Figuren 1 bis 4 grundsätzlich eine größere Anzahl von Reflektionen an der aus den Spiegelbereichen 30, 31, 32 gebildeten Reflektionsfläche 6 zugelassen; auch hier findet die Reflektion jeweils unter relativ geringen Reflexionswinkeln statt, so dass die Absorption und somit der Verlust an Signalintensität gering sind. Durch den ebenen mittleren Spiegelbereich 32 wird der Messbereich 13 entsprechend vergrößert. Auch bei dieser Ausführungsform kann die Reflektionsfläche 6 durch einen auf der Leiterplatte 2 bzw. auf der IR-Strahlungsquelle 3 und dem Detektor 4 befestigten Reflektor 5 gebildet werden oder als Innenfläche eines Gehäusedeckels ausgebildet sein.

Bei dem in Fig. 7 gezeigten Beispiel, das nicht Teil der Erfindung ist, sind die IR-Strahlungsquelle 3 und der Detektor 4 im Brennpunkt von parabolischen Spiegelbereichen 33, 34 angeordnet, die über einen ebenen, mittleren Flächenbereich 32 verbunden sind und auf einer gemeinsamen optischen Achse A liegen. Der mittlere Flächenbereich 32 kann wiederum als Spiegelbereich ausgebildet sein; grundsätzlich ist bei dieser Ausführungsform jedoch auch ein nicht spiegelnder Flächenbereich 32 möglich.

Das als Abschirmeinrichtung dienende Kleingehäuse 35 lässt wiederum Strahlung S nur auf den die Strahlungsquelle 3 umgebenden parabolischen Spiegelbereich 33 der Reflektionsfläche 6 durch, so dass die Strahlung S von dem parabolischen Spiegelbereich 33 parallel zur optischen Achse A reflektiert wird, an dem mittleren Flächenbereich 32 idealerweise keine Strahlung auftrifft und die einfallende Strahlung S vollständig von dem den Detektor 4 umgebenen zweiten parabolischen Spiegelbereich 34 auf den Detektor 4 gebündelt wird. Bei dieser Ausführungsform füllt der mit Strahlung S durchsetzte Messbereich 13 idealerweise den zwischen Leiterplatte 2 und Reflektionsfläche 6 ausgebildeten Messraum 9 nahezu vollständig.

Bei dem Beispiel der Fig. 7, das nicht Teil der Erfindung ist, finden somit genau zwei Reflektionen der IR-Strahlung S statt, nämlich an den Parabolspiegelbereichen 33 und 34. Die Fokussierung ist auf einen kleineren Bereich des Detektors 4 möglich. Allerdings erfolgt die Reflektion bei dieser Ausführungsform unter einem größeren Reflektionswinkel und somit mit möglicherweise größeren Strahlungsverlusten als bei den Ausführungsformen und Beispiele der Fig. 1 bis 6.

## Patentansprüche

1. Gassensor zur Messung mindestens einer Gaskonzentration, insbesondere für eine Fahrzeug-Klimaanlage, mit
einem Substrat (2),
einer auf dem Substrat (2) befestigten IR-Strahlungsquelle (3),
einem auf dem Substrat (2) befestigten IR-Detektor (4),
einem Messraum (9) zur Aufnahme eines Gases mit der zu messenden Gaskonzentration,
einer in dem Messraum (9) zwischen der IR-Strahlungsquelle (3) und dem IR-Detektor (4) angeordneten Abschirmeinrichtung (12) zum Abschirmen einer direkten Übertragung von IR-Strahlung (S) von der IR-Strahlungsquelle (3) zu dem IR-Detektor (4) entlang einer optischen Achse (A), und
einer Reflektionsfläche (6), die einen konkav gewölbten ersten Spiegelbereich (7, 30) zur Aufnahme der von der IR-Strahlungsquelle (3) ausgesandten IR-Strahlung (S) und einen die IR-Strahlung (S) zu dem IR-Detektor (4) reflektierenden, konkav gewölbten zweiten Spiegelbereich (8, 31) aufweist, wobei der Messraum (9) zwischen der Reflektionsfläche (6) und dem Substrat (2) gebildet ist, **dadurch gekennzeichnet, dass**
- der erste Spiegelbereich (7, 30) und der zweite Spiegelbereich (8, 31) mit halbkreisförmigen Querschnitt entlang der optischen Achse (A) ausgebildet sind,
- die Reflektionsfläche (6) halbzylinderförmig ausgebildet ist und
- die IR-Strahlungsquelle (3) und der IR-Detektor (4) an die Reflektionsfläche (6) angrenzen, wobei die Abschirmeinrichtung (12) bei oder als Teil der IR-Strahlungsquelle (3) ausgebildet ist, als ein eine IR-Lampe (10) umgebendes Kleingehäuse (12), das lediglich IR-Strahlung unter einem Ausstrahlwinkel α von 40° bis 60° austreten lässt, wobei die von der IR-Strahlungsquelle (3) ausgesendeten IR-Strahlung (S) unter einem Einfallswinkel von kleiner 45° auf den ersten Spiegelbereich (7, 30) fällt.

2. Gassensor nach Anspruch 1, **dadurch gekennzeichnet, dass** die Reflektionsfläche (6) einen ersten sphärischen Spiegelbereich (30), einen von dem ersten sphärischen Spiegelbereich (30) in Richtung der optischen Achse (A) beabstandeten zweiten sphärischen Spiegelbereich (31) und einen die sphärischen Spiegelbereiche (30, 31) verbindenden ebenen mittleren Spiegelbereich (32) aufweist.

3. Gassensor nach einem der vorherigen Ansprüche, **dadurch gekennzeichnet, dass** das Substrat eine Leiterplatte (2) ist.

4. Gassensor nach einem der vorherigen Ansprüche, **dadurch gekennzeichnet, dass** die Reflektionsfläche (6) sich in einer zu der Substratoberfläche parallelen, zu der optischen Achse (A) orthogonal verlaufenden Längsrichtung (L) gleichmäßig erstreckt.

5. Gassensor nach Anspruch 4, **dadurch gekennzeichnet, dass** eine einzige IR-Strahlungsquelle (3) und mindestens zwei in der Längsrichtung (L) hintereinander angeordnete Detektoren (4) vorgesehen sind.

## Claims

1. Gas sensor for measuring at least one gas concentration, in particular for a vehicle airconditioning system, having
a substrate (2),
an IR radiation source (3) attached to the substrate (2), an IR detector (4) attached to the substrate (2),
a measurement space (9) for receiving a gas having the gas concentration that is to be measured,
a shielding device (12), arranged in the measurement space (9) between the IR radiation source (3) and the IR detector (4), for shielding a direct transfer of IR radiation (S) from the IR radiation source (3) to the IR detector (4) along an optical axis (A), and
a reflection surface (6), having a concavely curved first mirror region (7, 30) for receiving the IR radiation (S) emitted by the IR radiation source (3) and a concavely curved second mirror region (8, 31) reflecting the IR radiation (S) to the IR detector (4),
wherein the measurement space (9) is formed between the reflection surface (6) and the substrate (2), **characterized in that**
- the first mirror region (7, 30) and the second mirror region (8, 31) have a semi-circular cross section along the optical axis (A),
- the reflector surface (6) has the shape of a semicylinder, and
- the IR radiation source (3) and the IR detector (4) adjoin the reflection surface (6), wherein
the shielding device (12) is formed at or as a part of the IR radiation source (3) in the form of a small housing (12), which surrounds an IR lamp (10) and permits only IR radiation to exit at an emission angle α of 40° to 60°, wherein
the IR radiation (S) emitted by the IR radiation source (3) is incident on the first mirror region (7, 30) at an angle of incidence of less than 45°.

2. Gas sensor according to Claim 1, **characterized in that** the reflection surface (6) has a first spherical mirror region (30), a second spherical mirror region (31), arranged at a distance from the first spherical mirror region (30) in the direction of the optical axis (A), and a plane central mirror region (32) connecting the spherical mirror regions (30, 31).

3. Gas sensor according to either of the preceding claims, **characterized in that** the substrate is a printed circuit board (2).

4. Gas sensor according to one of the preceding claims, **characterized in that** the reflection surface (6) extends uniformly in a longitudinal direction (L) that is parallel to the substrate surface and extends orthogonally to the optical axis (A).

5. Gas sensor according to Claim 4, **characterized in that** a single IR radiation source (3) and at least two detectors (4), arranged one after the other in the longitudinal direction (L), are provided.

## Revendications

1. Détecteur de gaz servant à mesurer au moins une concentration de gaz, notamment pour une installation de climatisation de véhicule, avec :
un substrat (2) ;
une source de rayonnement IR (3) fixée sur le substrat (2) ;
un détecteur IR (4) fixé sur le substrat (2) ;
une chambre de mesure (9) pour recevoir un gaz afin de mesurer sa concentration de gaz ;
un dispositif de protection (12) disposé dans la chambre de mesure (9) entre la source de rayonnement IR (3) et le détecteur IR (4) pour protéger contre la transmission directe de rayonnement IR (S) de la source de rayonnement IR (3) vers le détecteur IR (4) le long d'un axe optique (A) ; et
une surface réfléchissante (6) comportant une première zone de miroir (7, 30) bombée concavement pour recevoir le rayonnement IR (S) émis par la source de rayonnement IR (3) et une deuxième zone de miroir (8, 31) bombée concavement réfléchissant le rayonnement IR (S) en direction du détecteur IR (4) ;
la chambre de mesure (9) étant formée entre la surface réfléchissante (6) et le substrat (2) ;
**caractérisé en ce que** :
- la première zone de miroir (7, 30) et la deuxième zone de miroir (8, 31) sont réalisées avec une section transversale en forme de demi-cercle le long de l'axe optique (A) ;
- la surface réfléchissante (6) est réalisée en forme de demi-cylindre ; et
- la source de rayonnement IR (3) et le détecteur IR (4) jouxtent la surface réfléchissante (6) ;
le dispositif de protection (12) étant réalisé à proximité de la source de rayonnement IR (3) ou comme faisant partie d'elle, sous la forme d'un petit carter (12) entourant une lampe IR (10) laissant seulement sortir le rayonnement IR en dessous d'un angle de rayonnement α de 40° à 60° ;
le rayonnement IR (S) émis par la source de rayonnement IR (3) rencontre la première zone de miroir (7, 30) avec un angle d'incidence inférieur à 45°.

2. Détecteur de gaz selon la revendication 1, **caractérisé en ce que** la surface réfléchissante (6) comporte une première zone de miroir (30) sphérique, une deuxième zone de miroir (31) sphérique placée à une certaine distance de la première zone de miroir (30) sphérique en direction de l'axe optique (A) et une zone de miroir (32) sphérique centrale plane reliant les zones de miroir (30, 31).

3. Détecteur de gaz selon l'une quelconque des revendications précédentes, **caractérisé en ce que** le substrat est une plaque conductrice (2).

4. Détecteur de gaz selon l'une quelconque des revendications précédentes, **caractérisé en ce que** la surface réfléchissante (6) s'étend régulièrement dans une direction longitudinale (L) parallèle à la surface de substrat s'étendant perpendiculairement à l'axe optique (A).

5. Détecteur de gaz selon la revendication 4, **caractérisé en ce qu'**une seule source de rayonnement IR (3) et au moins deux détecteurs (4) disposés l'un derrière l'autre sont prévus dans la direction longitudinale (L).
